(19) Europäisches Patentamt
European Patent Office
Office européen des brevets

(11) **EP 3 298 237 B1**

(12) **EUROPEAN PATENT SPECIFICATION**

(45) Date of publication and mention
of the grant of the patent:
**25.09.2019 Bulletin 2019/39**

(51) Int Cl.:
***E21B 47/026*** (2006.01)   ***G01V 3/28*** (2006.01)

(21) Application number: **15899824.5**

(22) Date of filing: **28.07.2015**

(86) International application number:
**PCT/US2015/042420**

(87) International publication number:
**WO 2017/019031 (02.02.2017 Gazette 2017/05)**

(54) **ASSESSMENT OF FORMATION TRUE DIP, TRUE AZIMUTH, AND DATA QUALITY WITH MULTICOMPONENT INDUCTION AND DIRECTIONAL LOGGING**

FORMUNGSBEURTEILUNG DER WAHREN STEIGUNG, DES WAHREN AZIMUTS UND DER DATENQUALITÄT MIT MULTIKOMPONENTENINDUKTION UND DIREKTIONALER MESSUNG

ÉVALUATION DE PENDAGE RÉEL, D'AZIMUT RÉEL ET DE QUALITÉ DE DONNÉES D'UNE FORMATION PAR DIAGRAPHIE DE CONDUCTIVITÉ À COMPOSANTES MULTIPLES ET DIAGRAPHIE DIRECTIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **Halliburton Energy Services, Inc.**
**Houston, TX 77032 (US)**

(72) Inventors:
• **HOU, Junsheng**
**Kingwood, TX 77345 (US)**
• **WANG, MingJen**
**Bellaire, TX 77401 (US)**

(74) Representative: **Hoffmann Eitle**
**Patent- und Rechtsanwälte PartmbB**
**Arabellastraße 30**
**81925 München (DE)**

(56) References cited:
**WO-A1-2015/051300       WO-A1-2015/051300**
**US-A1- 2010 004 866      US-A1- 2010 004 866**
**US-A1- 2011 025 525      US-A1- 2013 080 058**
**US-A1- 2014 102 795**

**Description**

Background

In the oil and gas industry, resistivity logging tools are frequently used to measure the electrical resistivity of rock formations surrounding an earth borehole. Such information regarding resistivity is useful in ascertaining the presence or absence of hydrocarbons. A typical resistivity logging tool includes a transmitter antenna and two or more receiver antennas located at different distances from the transmitter antenna along the axis of the tool. The transmitter antenna is used to create electromagnetic fields in the surrounding formation. In turn, the electromagnetic fields in the formation induce an electrical voltage in each receiver antenna. Due to geometric spreading and absorption by the surrounding earth formation, the induced voltages in the various receiving antennas have different phases and amplitudes. The phase difference and amplitude ratio of the induced voltages in the receiver antennas are indicative of the resistivity of the formation. The depth of investigation (as defined by a radial distance from the tool axis) to which such a resistivity measurement pertains is a function of the frequency of the transmitter antenna and the distance from the transmitter to the receiver antennas. Thus, one may achieve multiple radial depths of investigation of resistivity either by providing multiple transmitter antennas at different distances from the receiver antennas or by operating a single transmitter at multiple frequencies.

Many formations are electrically anisotropic, a property which is generally attributable to fine layering during the sedimentary build-up of the formation. Hence, in a formation coordinate system oriented such that the *x-y* plane is parallel to the formation layers and the *z* axis is perpendicular to the formation layers, resistivities $R_x$ and $R_y$ in directions *x* and *y,* respectively, are the same, but resistivity $R_z$ in the *z* direction is different from $R_x$ and $R_y$. Thus, the resistivity in a direction parallel to the plane of the formation (*i.e.,* the *x-y* plane) is known as the horizontal resistivity, $R_h$, and the resistivity in the direction perpendicular to the plane of the formation (*i.e.,* the *z* direction) is known as the vertical resistivity, $R_v$. The anisotropy coeffcient, $\eta$, is defined as $\eta = [R_v/R_h]^{1/2}$.

The relative dip angle or relative dip, $\theta$, based on the logging tool is the angle between the tool axis and the normal to the plane of the formation. The resistive anisotropy and the relative dip each have effects on resistivity logging tool measurements. As a result, resistivity logging systems attempt to model and account for the anisotropy and relative dip, but the various methods for approaching this issue achieve different levels of success in different environments, creating undesirable uncertainty.

WO 2015/051300 A1 discloses determination of formation dip/azimuth with multicomponent induction data.

Summary of the Invention

In a first aspect of the present invention, there is provided a method for real-time formation assessment according to Claim 1.

In a second aspect of the present invention, there is provided a system for real-time formation assessment according to Claim 8.

Brief Description of the Drawings

Accordingly, there are disclosed herein various systems and methods for formation assessment using true dip and true azimuth-based quality calculations with multi-component induction (MCI) and directional logging. In the following detailed description of the various disclosed embodiments, reference will be made to the accompanying drawings in which:

Fig. 1 is a contextual view of an illustrative logging while drilling (LWD) environment;
Fig. 2 is a contextual view of an illustrative wireline environment;
Fig. 3 is a schematic cross-section of an illustrative logging tool;
Fig. 4 shows an illustrative antenna configuration model for a multi-component induction (MCI) logging tool;
Fig. 5A is a diagram showing three illustrative coordinate systems;
Fig. 5B is a diagram showing borehole dip and azimuth in the borehole coordinate system;
Fig. 6 is a flow diagram of an illustrative method of formation assessment using true dip, true azimuth, and their data quality calculations; and
Fig. 7 shows several illustrative logs showing relative dip, relative azimuth, true dip, true azimuth, and data quality.

It should be understood, however, that the specific embodiments given in the drawings and detailed description thereto do not limit the disclosure. The scope of the invention is defined only by the appended claims.

Notation and Nomenclature

Certain terms are used throughout the following description and claims to refer to particular system components and configurations. As one of ordinary skill will appreciate, companies may refer to a component by different names. This document does not intend to distinguish between components that differ in name but not function. In the following discussion and in the claims, the terms "including" and "comprising" are used in an openended fashion, and thus should be interpreted to mean "including, but not limited to...". Also, the term "couple" or "couples" is intended to mean either an indirect or a direct electrical or physical connection. Thus, if a first device couples to a second device, that connection may be through a direct electrical connection, through an indirect electrical connection via other devices and connections, through a direct physical connection, or through an indirect physical connection via other devices and connections in various embodiments.

Detailed Description

The issues identified in the background are at least partly addressed by systems and methods of real-time formation assessment using true dip and true azimuth-based quality calculations. Specifically, using true dip and true azimuth data that passes a threshold of quality significantly improves logs and formation models, and thus consequently improves decisions based on such data, compared to using relative dip and relative azimuth. As discussed in detail below, true dip and true azimuth are determined from relative dip, relative azimuth, borehole dip, borehole azimuth, and relative bearing. Once determined, the quality of the true dip and true azimuth calculations may be assessed. Should the quality exceed a programmable threshold, the true dip and true azimuth calculations may be incorporated into logs and formation models, which themselves become more accurate by incorporating more accurate data. Accordingly, decisions based on the logs and formation models can be made confidently.

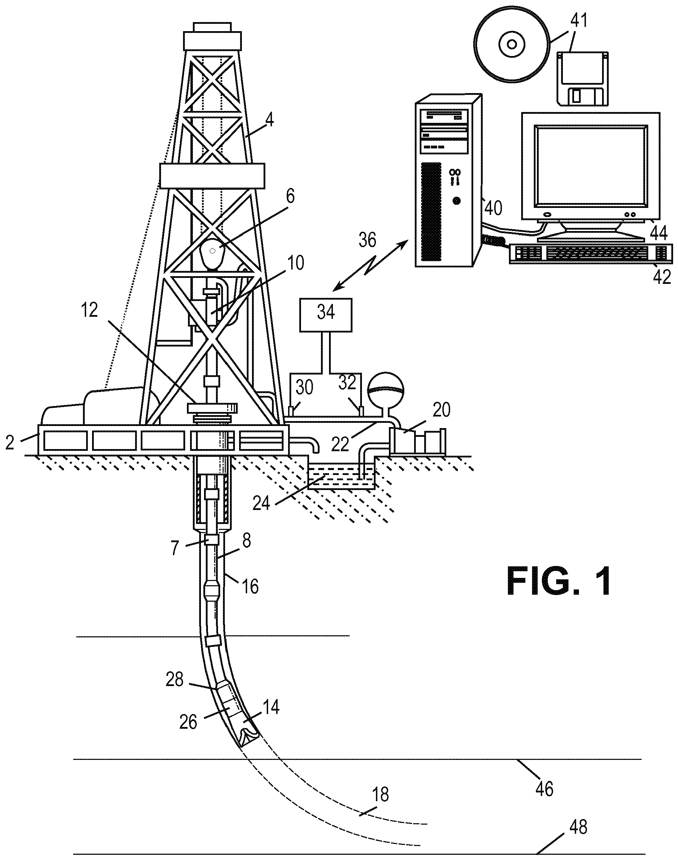

The disclosed systems and methods are best understood in terms of the context in which they are employed. As such, Figure 1 depicts a drilling platform 2 supporting a derrick 4 having a traveling block 6 for raising and lowering a drill string 8. A top drive 10 supports and rotates the drill string 8 as it is lowered through the wellhead 12. A drill bit 14 is driven by a downhole motor and/or rotation of the drill string 8. As the bit 14 rotates, it creates a borehole 16 that passes through various formations. The drill bit 14 is one piece of a bottom-hole assembly that typically includes one or more drill collars 7 (thick-walled steel pipe) to provide weight and rigidity to aid the drilling process. Some of these drill collars may include logging instruments to gather measurements of various drilling parameters such as position, orientation, weight-on-bit, borehole diameter, resistivity, etc. Resistivity can be measured by electromagnetic logging tools, where the transmitter and receiver antennas are typically mounted with their axes parallel to the longitudinal axis of the tool.

The system further includes a tool 26 to gather measurements of formation properties as discussed further below. Using these measurements in combination with the tool orientation measurements, the driller can steer the drill bit 14 along a desired path 18 relative to formation boundaries 46, 48 using any one of various suitable directional drilling systems including steering vanes, a "bent sub," and a rotary steerable system. A pump 20 circulates drilling fluid through a feed pipe 22 to top drive 10, downhole through the interior of drill string 8, through orifices in drill bit 14, back to the surface via the annulus around drill string 8, and into a retention pit 24. The drilling fluid transports cuttings from the borehole into the pit 24 and aids in maintaining the borehole integrity. Moreover, a telemetry sub 28 coupled to the downhole tools 26 can transmit telemetry data to the surface via mud pulse telemetry. A transmitter in the telemetry sub 28 modulates a resistance to drilling fluid flow to generate pressure pulses that propagate along the fluid stream at the speed of sound to the surface.

One or more pressure transducers 30, 32 convert the pressure signal into electrical signal(s) for a signal digitizer 34. Note that other forms of telemetry exist and may be used to communicate signals from downhole to the digitizer 34. Such telemetry may employ acoustic telemetry, electromagnetic telemetry, or telemetry via wired drill pipe. The digitizer 34 supplies a digital form of the pressure signals via a communications link 36 to a computer 40 or some other form of a data processing device. The communications link 36 may be wired or wireless.

Computer 40 operates in accordance with software (which may be stored on information storage media 41) and user input via an input device 42 to process and decode the received signals. The software may include instructions that, when executed by a processor coupled with memory, cause the processor to perform a process described herein. The resulting telemetry data may be further analyzed and processed by the computer 40 to generate a display of useful information on a computer monitor 44 or some other form of a display device. As shown in Figure 1, a processing system including the computer 40 is external to the downhole tool 26, but in at least some embodiments the processing system is internal to the downhole tool 26. For example, a downhole tool such as a multi-component induction (MCI) tool may include a processor, coupled with memory, that performs a process described herein.

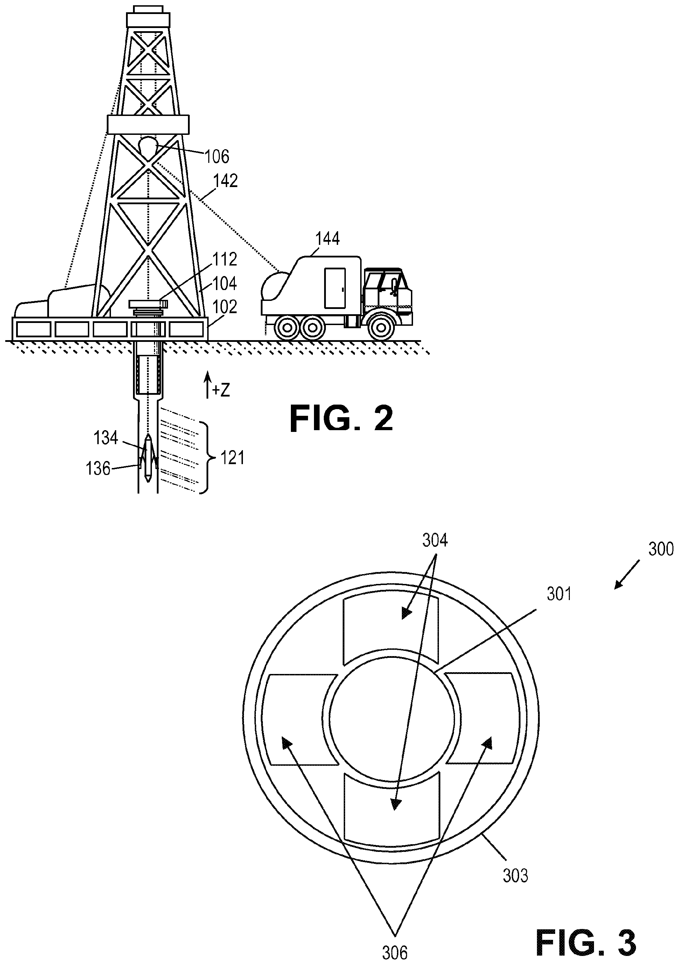

In an illustrative wireline environment, shown in Figure 2, a drilling platform 102 is equipped with a derrick 104 that supports a hoist 106. At various times during the drilling process, the drill string is removed from the borehole. Once the drill string has been removed, logging operations can be conducted using a wireline logging tool 134, i.e., a sensing instrument sonde suspended by a cable 142, run through the rotary table 112, having conductors for transporting power to the tool and telemetry from the tool to the surface. A multi-component induction logging portion of the logging tool 134 may have centralizing arms 136 that center the tool within the borehole as the tool is pulled uphole. A logging facility 144 collects measurements from the logging tool 134, and includes a processing system for processing and storing the measurements 121 gathered by the logging tool from the formation.

Figure 3 is a cross-section of an illustrative MCI tool 300 capable of measuring resistivity. MCI tools use transmitter and receiver coil-antennas to excite fields at three non-parallel (usually orthogonal) directions. The tool 300 includes a metal tube 301 that defines a central bore which can be used as a fluid flow path (for logging while drilling embodiments). An outer sleeve 303 surrounds the tool 300 and keeps out the borehole fluid. The sleeve 303 is preferably nonconductive, but may have conductive elements. The mandrel between the tube 301 and the sleeve 303 may be metal. The mandrel is designed to accommodate a pair of antennas 304 oriented along an x-axis, a pair of antennas 306 oriented along a y-axis, and a pair of antennas oriented along a z-axis (not shown). The antennas are provided in pairs to maximize their sensing areas while at the same time preserving their symmetry. The antennas in each pair may be coupled in parallel or series.

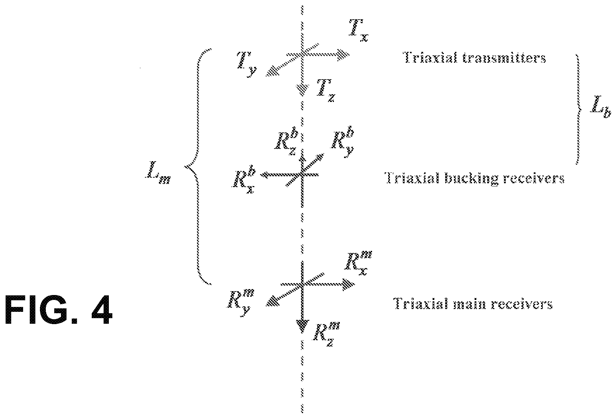

The measurements taken by a MCI tool as it rotates enable a full set of orthogonal coupling component measurements to be obtained at each point along the borehole axis. The orthogonal coupling component measurements correspond to the tool model shown in Figure 4. A triad of transmitters, $T_x$, $T_y$, $T_z$, represent magnetic dipole antennas oriented parallel to the tool's x, y, and z axes respectively. A triad of main receivers, $R_x^m$, $R_y^m$, $R_z^m$, similarly represent magnetic dipole antennas oriented along these axes, as do a triad of bucking receivers $R_x^b$, $R_y^b$, $R_z^b$.

The main receiver triad is spaced at a distance $L_m$ from the transmitter triad, and the bucking receiver triad is spaced at a distance $L_b$ from the transmitter triad. The signal measurements of the bucking receiver triad can be subtracted from the main receiver triad to eliminate the direct signal from the transmitter and increase sensitivity to formation properties. The magnetic field, **h**, in the receiver coils with a given signal frequency can be represented in terms of the magnetic moments, **m**, at the transmitters and a coupling matrix, **C**, according to equation (1).

$$\mathbf{h} = \mathbf{C} \, \mathbf{m} \tag{1}$$

In express form, equation (1) can be written as equation (2).

$$\begin{bmatrix} H_x \\ H_y \\ H_z \end{bmatrix} = \begin{bmatrix} C_{xx} & C_{xy} & C_{xz} \\ C_{yx} & C_{yy} & C_{zz} \\ C_{zx} & C_{zy} & C_{zz} \end{bmatrix} \begin{bmatrix} M_x \\ M_y \\ M_z \end{bmatrix} \tag{2}$$

$M_X$, $M_Y$, and $M_Z$ are the magnetic moments (proportional to transmit signal strength) created by transmitters $T_X$, $T_Y$, and $T_Z$, respectively. $H_X$, $H_Y$, $H_Z$ are the magnetic fields (proportional to receive signal strength) at the receiver antennas $R_X$, $R_Y$, and $R_Z$, respectively.

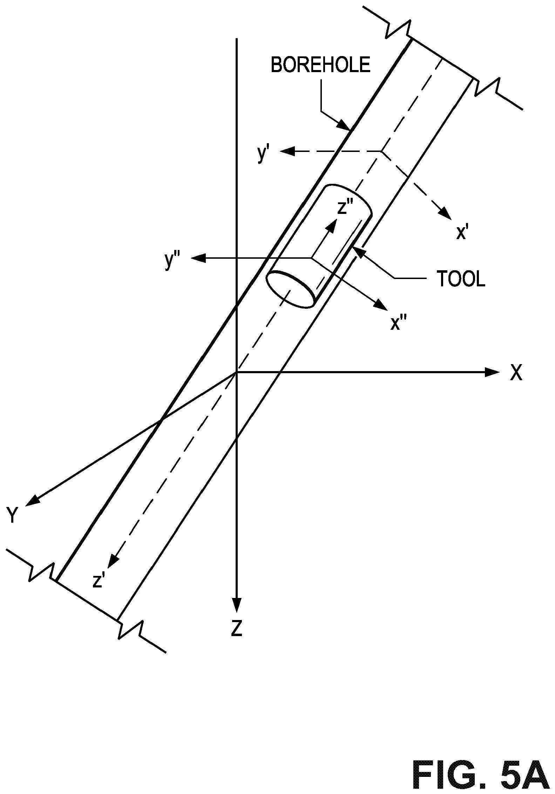

Three coordinate systems are shown in Figure 5A: an Earth coordinate system (X, Y, Z), a borehole coordinate system (x', y', z'), and a tool coordinate system (x", y", z"). In the Earth coordinate system, the positive x-axis points north, the negative x-axis points south, the positive y-axis points west, and the negative y-axis points east. The negative z-axis points in the direction of gravity, or towards the center of the Earth, and the positive z-axis points away from the direction of gravity or away from the center of the Earth. The borehole coordinate system has a z-axis that follows the central axis of the borehole. The x-axis of the borehole coordinate system extends perpendicularly from the central axis toward the high side of the borehole. The y-axis extends perpendicular to the other two axes in accordance with the right-hand rule. The tool coordinate system similarly has a z-axis that follows the central axis of the tool. The x-axis of the tool coordinate system extends perpendicularly from the central axis toward the high side of the borehole. The y-axis extends perpendicular to the other two axes in accordance with the right-hand rule.

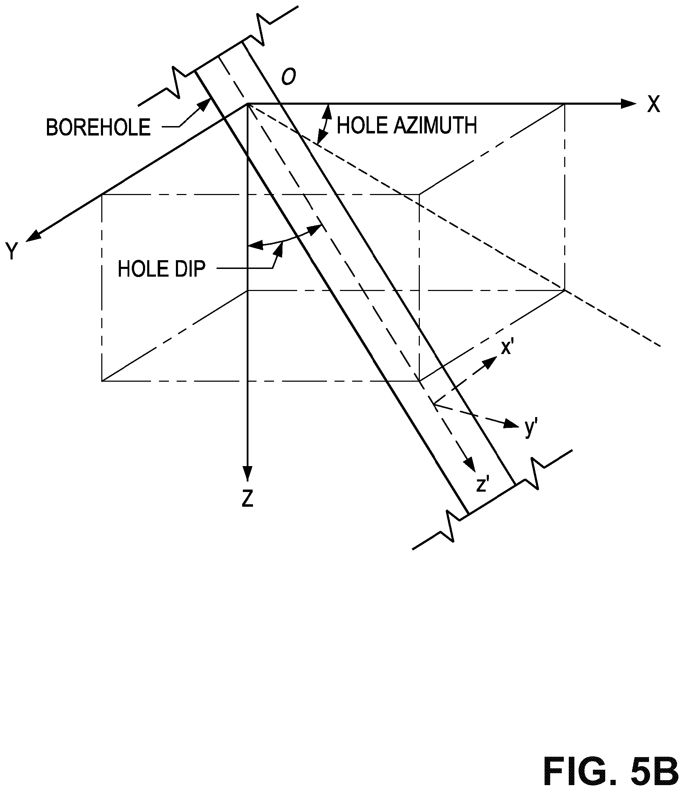

Any of the coordinate systems may be expressed as a rotated form of another coordinate system using a first rotation angle, such as dip, to align the z-axes and a second rotation angle, such as azimuth, to align the x-axes. For example, Figure 5B illustrates dip and azimuth for the borehole coordinate system with a formation plane of XY in the Earth coordinate system, which is sometimes referred to as the formation coordinate system. The borehole dip is the acute angle formed between the borehole axis, z', and the vertical (here the z-axis of the Earth coordinate system, sometimes measured in the direction of the Earth's gravity). The borehole azimuth is the angle formed between the positive earth coordinate x-axis, *X,* and the borehole direction as projected in the XY Earth coordinate plane measured in the clockwise direction.

Returning to Figure 5A, the tool coordinate system similarly has a z-axis that follows the central axis of the tool. Occasionally, the z-axis of the tool coordinate system will be aligned with the z-axis of the borehole coordinate system, but such alignment is not necessary. Orientation sensors in the tool measure the rotation of the tool's x- and y-axes relative to those of the borehole, enabling the coupling measurements to be calculated in terms of the borehole's coordinate system. The dip and azimuth in the tool coordinate system is referred to as the relative dip and relative azimuth. The relative dip is the acute angle formed between the tool axis, *z",* and the normal of the formation plane. For clarity, here the formation plane is the XY Earth coordinate plane. As such, the normal of the plane is in the Z Earth coordinate direction. The relative azimuth is the angle formed between the positive tool coordinate x-axis, *x",* and the direction of the formation measured in the clockwise direction.

Finally, the true dip is the acute angle formed between the earth coordinate z-axis, Z, and the normal of the formation plane. The true dip here is 0 degrees because the formation plane lies in the XY plane. The true azimuth is the angle formed between geographic north and the direction of greatest slope of the formation plane measured in the clockwise direction.

A description of the relationship between the three coordinate systems will be helpful. A unit vector in the Earth coordinate system is of the form

$$\begin{bmatrix} u_1 \\ u_2 \\ u_3 \end{bmatrix}.$$

The unit vector represents the normal to the formation plane as expressed in the Earth coordinate system. As described above, the MCI logging tool measures formation characteristics in a LWD system. Based on those measurements, the MCI tool provides relative dip in the tool coordinate system, $\alpha''$; relative azimuth in the tool coordinate system, $\beta''$; relative dip in the borehole coordinate system, *a;* relative azimuth in the borehole coordinate system, *b;* and relative bearing, *RB* to an embedded processing system or an external processing system. The processing system calculates true dip, $\alpha$, and true azimuth, $\beta$, as a function of these inputs as shown in equations (3)-(4).

$$\alpha = f_\alpha(\alpha'', \beta'', a, b, RB) \tag{3}$$

$$\beta = f_\beta(\alpha'', \beta'', a, b, RB) \tag{4}$$

Relative bearing is the angle between the high side of the tool within the borehole and a reference point in the tool sometimes referred to as the tool key or the scribe line. The tool key is reference point with which tools on the string should align for proper azimuthal orientation, and the scribe line is a marking or etching on the tool indicating the tool face direction.

Using $\alpha''$ and $\beta''$, the unit vector in the tool coordinate system

$$\begin{bmatrix} u_1'' \\ u_2'' \\ u_3'' \end{bmatrix}$$

may be calculated using equations (5)-(7).

$$u_1'' = \sin(\alpha'')\cos(\beta'') \tag{5}$$

$$u_2'' = \sin(\alpha'')\sin(\beta'') \tag{6}$$

$$u_3'' = \cos(\alpha'') = u_3' = \cos(\alpha') \tag{7}$$

Using

$$\begin{bmatrix} u_1{}'' \\ u_2{}'' \\ u_3{}'' \end{bmatrix}$$

and RB, the unit vector in the borehole coordinate system

$$\begin{bmatrix} u_1{}' \\ u_2{}' \\ u_3{}' \end{bmatrix}$$

may be calculated using equations (8)-(10).

$$u_1' = u_1'' \cdot \cos(RB - 90°) - u_2'' \cdot sin(RB - 90°) = u_1'' \cdot \sin(RB) + u_2''\cos(RB) \quad (8)$$

$$u_2' = u_1'' \cdot \sin(RB - 90°) + u_2'' \cdot \cos(RB - 90°) = -u_1'' \cdot \cos(RB) + u_2'' \cdot \sin(RB) \quad (9)$$

$$u_3' = u_3'' \quad\quad\quad (10)$$

Using relative dip $a$ and relative azimuth $b$, the direction cosines of coordinate transformation may be calculated using equations (11)-(19), where $\cos(x_i, x_j')$ is the cosine of the angle between the $x_i$ and $x_j'$ axes of the Earth and the borehole coordinate systems respectively for $i,j$ = 1, 2, 3..

$$\cos(x_1, x_1') = \cos(a)\cos(b) \quad\quad (11)$$

$$\cos(x_1, x_2') = \cos(a)\sin(b) \quad\quad (12)$$

$$\cos(x_1, x_3') = -\sin(a) \quad\quad (13)$$

$$\cos(x_2, x_1') = -\sin(b) \quad\quad (14)$$

$$\cos(x_2, x_2') = \cos(b) \quad\quad (15)$$

$$\cos(x_2, x_3') = 0 \quad\quad (16)$$

$$\cos(x_3, x_1') = \sin(a)\cos(b) \quad\quad (17)$$

$$\cos(x_3, x_2') = \sin(a)\sin(b) \quad\quad (18)$$

$$\cos(x_3, x'_3) = \cos(a) \quad\quad\quad (19)$$

Using $\begin{bmatrix} u_1' \\ u_2' \\ u_3' \end{bmatrix}$ and the direction cosines of coordinate transformation, the true dip, $\alpha$, and true azimuth, $\beta$, may be calculated using equations (20)-(21).

$$\alpha = cos^{-1}(u_1' \cos(x_3, x_1') + u_2' \cos(x_3, x_2') + u_3' \cos(x_3, x_3')) \quad\quad (20)$$

$$\beta = \tan^{-1}\left(\frac{u_1' \cos(x_2, x_1') + u_2' \cos(x_2, x_2') + u_3' \cos(x_2, x_3')}{u_1' \cos(x_1, x_1') + u_2' \cos(x_1, x_2') + u_3' \cos(x_1, x_3')}\right) \quad\quad (21)$$

Additionally, using $\alpha$ and $\beta$, an assessment of the quality of each, $\sigma_\alpha^2$ and $\sigma_\beta^2$, can be calculated using equations (22)-(23).

$$\sigma_\alpha^2 = \sum_{i=1}^{5} \sigma_{x_i}^2 \cdot \left(\frac{\partial \alpha}{\partial x_i}\right)^2 \quad\quad\quad (22)$$

$$\sigma_\beta^2 = \sum_{i=1}^{5} \sigma_{x_i}^2 \cdot \left(\frac{\partial \beta}{\partial x_i}\right)^2 \quad\quad\quad (23)$$

Here, $\sigma_\alpha^2$ and $\sigma_\beta^2$ are the variances of the calculated true dip, $\alpha$, and true azimuth, $\beta$; $x_1 = \alpha''$, $x_2 = \beta''$, $x_3 = a$, $x_4 = b$, and $x_5 = RB$; $\sigma_{x_i}^2$ are the variances of $\alpha''$, $\beta''$, $a$, $b$, and RB; and $\left(\frac{\partial \alpha}{\partial x_i}\right)^2$ and $\left(\frac{\partial \beta}{\partial x_i}\right)^2$ are the partial derivatives of $\alpha$ and $\beta$ with respect to $x_i$.

The processing system may update a log or model of the formation with the true dip and the true azimuth if the quality of the true dip and the true azimuth, e.g. $\sigma_\alpha^2$ and $\sigma_\beta^2$, exceeds a programmable quality threshold, e.g. if the variances are sufficiently small. Otherwise, the true dip and true azimuth may be omitted from the log or model. With reliable data, decisions regarding the well and the formation may be made with confidence. For example, the processing system may determine a perforation point along the borehole or adjust the steering of a drill bit within the borehole based on logs or models incorporating true dip and true azimuth.

This disclosure has been described using the convention of geographic north, sometimes referred to as true north. However, magnetic north may be used instead by adjusting the calculations by the magnetic declination, $\delta_{mg}$, or angle between magnetic north (Nm) and true north (Ng) on the horizontal plane. By convention, the declination is positive when magnetic north is east of true north and negative when it is to the west. Specifically, true azimuth, $\beta$, may be transformed into true azimuth with magnetic declination, $\beta_m$, using equation (24).

$$\beta_m = \begin{cases} \beta - \delta_{mg}, & if\ (\beta - \delta_{mg}) \geq 0 \\ 360° - (\beta - \delta_{mg}), & if\ (\beta - \delta_{mg}) < 0 \end{cases} \quad\quad (24)$$

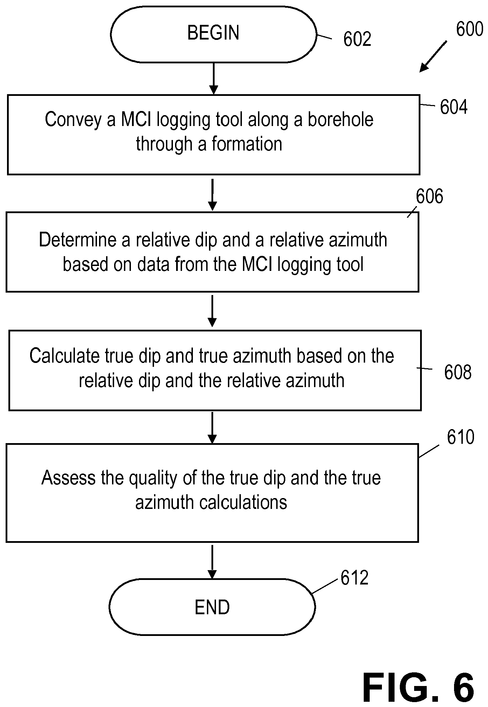

Figure 6 illustrates a method 600 of real-time formation assessment using quality of true dip and true azimuth calculations beginning at 602 and ending at 612. At 604, a multi-component induction (MCI) logging tool is conveyed along a borehole through a formation. The MCI tool measures characteristics of the formation and uses those measurements to determine relative dip in the tool coordinate system and relative azimuth in the tool coordinate system at 606. Additionally, the MCI tool may determine relative dip in the borehole coordinate system, relative azimuth in the borehole coordinate system, and relative bearing based on the measurements.

At 608, true dip and true azimuth of the formation are calculated based on the relative dip and the relative azimuth. First, relative dip and relative azimuth are used to calculate a unit vector in the tool coordinate system according to equations (5)-(7). Next, the unit vector and relative bearing are used to calculate a unit vector in the borehole coordinate system according to equations (8)-(10). Next, borehole dip and borehole azimuth are used to calculate the direction cosines of coordinate transformation according to equations (11)-(19). Finally, the unit vector in the borehole coordinate system and the direction cosines of coordinate transformation are used to calculate true dip and true azimuth according to equations (20)-(21). In at least one embodiment, true dip and true azimuth are calculated in a LWD environment.

At 610, the quality of the true dip and the true azimuth calculations are assessed. Assessing the quality may include calculating the variance of the true dip and the true azimuth according to equations (22)-(23). For example, calculating the variance of the true dip and the true azimuth may include calculating the first partial derivative of the true dip and the true azimuth with respect to the relative dip, the relative azimuth, a borehole dip, a borehole azimuth, and a relative bearing to the MCI logging tool. A log or model of the formation may be updated with the true dip and the true azimuth if the quality of the true dip and the true azimuth exceeds a threshold, e.g. if the variances are sufficiently small.

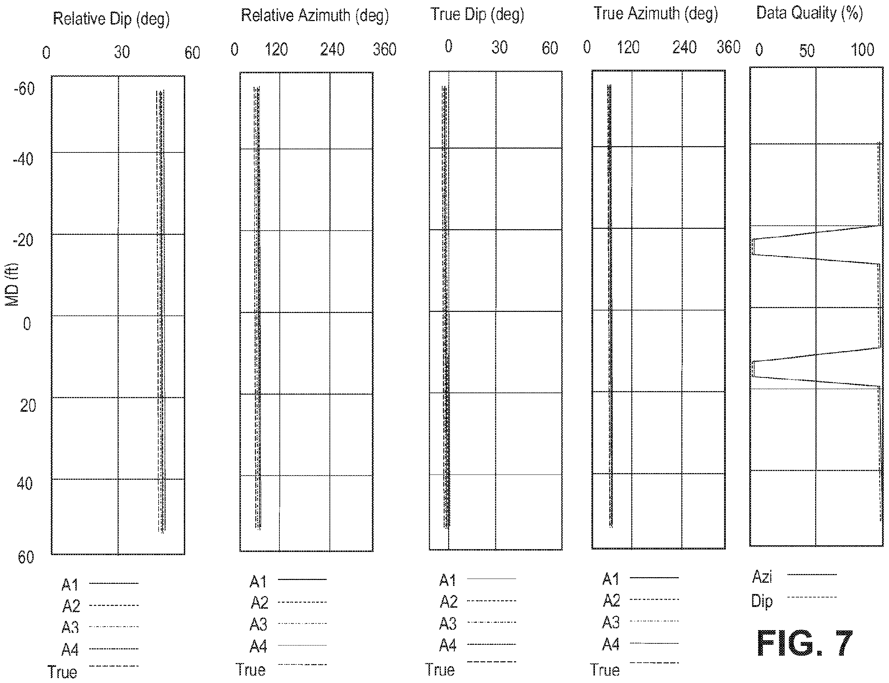

Figure 7 illustrates logs showing relative dip, relative azimuth, true dip, true azimuth, and data quality. Specifically, degrees or percentage of data quality are plotted against measured depth (in feet). For relative dip, relative azimuth, true dip, and true azimuth, the curves for A1-A4 represent results from four subarrays at a frequency of, e.g., 60 kHz. As can be seen, the results correspond to the true values well. For the data quality of the true dip and true azimuth calculations, the data quality is higher than the threshold in most instances.

In at least one embodiment, a method for real-time formation assessment using a multi-component induction logging tool includes conveying a multi-component induction (MCI) logging tool along a borehole through a formation. The method further includes determining a relative dip and a relative azimuth of the formation based on data from the MCI logging tool. The method further includes calculating true dip and true azimuth of the formation based on the relative dip and the relative azimuth. The method further includes assessing the quality of the true dip and the true azimuth calculations.

In another embodiment, a system for real-time formation assessment using a multi-component induction logging tool includes a multi-component induction (MCI) logging tool including an antenna array that facilitates logging while the MCI logging tool is conveyed along a borehole through a formation. The system further includes a processing system, coupled to the MCI logging tool, including a processor, coupled to memory, that executes software. The processing system determines a relative dip and a relative azimuth of the formation based on data from the MCI logging tool, calculates true dip and true azimuth of the formation based on the relative dip and the relative azimuth, and assesses the quality of the true dip and the true azimuth calculations.

The following features may be incorporated into the various embodiments. Assessing the quality may include calculating the variance of the true dip and the true azimuth. Calculating the variance of the true dip and the true azimuth may include calculating the first partial derivative of the true dip and the true azimuth with respect to the relative dip, the relative azimuth, a borehole dip, a borehole azimuth, and a relative bearing to the MCI logging tool. Calculating the true dip and the true azimuth may include calculating the true dip and the true azimuth of the formation, based on the relative dip and the relative azimuth, while drilling. The processing system may update a model of the formation with the true dip and the true azimuth if the quality of the true dip and the true azimuth exceeds a threshold. The processing system may determine a perforation point along the borehole if the quality of the true dip and the true azimuth exceeds a threshold. The processing system may adjust the steering of a drill bit within the borehole if the quality of the true dip and the true azimuth exceeds a threshold. Calculating the true dip and the true azimuth may include transforming the relative dip and the relative azimuth from a tool coordinate system to a borehole coordinate system. Calculating the true dip and the true azimuth may include transforming the relative dip and the relative azimuth from a borehole coordinate system to an earth coordinate system. Calculating the true dip and the true azimuth may include calculating the true dip and the true azimuth based on the relative dip, the relative azimuth, a borehole dip, a borehole azimuth, and a relative bearing to the MCI logging tool.

While the present disclosure has been described with respect to a limited number of embodiments, those skilled in the art will appreciate numerous modifications and variations therefrom.

**Claims**

1. A method for real-time formation assessment using a multi-component induction logging tool comprising:

   conveying a multi-component induction (MCI) logging tool (300) along a borehole (16) through a formation;
   determining a relative dip and a relative azimuth of the formation based on measurement data from the MCI logging tool;
calculating true dip and true azimuth of the formation based on the relative dip and the relative azimuth; and assessing a quality of the true dip and the true azimuth calculations.

2.  The method of claim 1, wherein assessing the quality comprises calculating the variance of the true dip and the true azimuth, and optionally wherein calculating the variance of the true dip and the true azimuth comprises calculating the first partial derivative of the true dip and the true azimuth with respect to the relative dip, the relative azimuth, a borehole dip, a borehole azimuth, and a relative bearing to the MCI logging tool.

3.  The method of claim 1 or 2, wherein calculating the true dip and the true azimuth comprises calculating the true dip and the true azimuth of the formation, based on the relative dip and the relative azimuth, while drilling.

4.  The method of any of the preceding claims, further comprising updating a model of the formation with the true dip and the true azimuth if the quality of the true dip and the true azimuth exceeds a threshold, and optionally further comprising determining a perforation point along the borehole if the quality of the true dip and the true azimuth exceeds a threshold.

5.  The method of any of the preceding claims, further comprising adjusting the steering of a drill bit within the borehole if the quality of the true dip and the true azimuth exceeds a threshold.

6.  The method of any of the preceding claims, wherein calculating the true dip and the true azimuth comprises transforming the relative dip and the relative azimuth from a tool coordinate system to a borehole coordinate system and optionally from a borehole coordinate system to an earth coordinate system.

7.  The method of any of the preceding claims, wherein calculating the true dip and the true azimuth comprises calculating the true dip and the true azimuth based on the relative dip, the relative azimuth, a borehole dip, a borehole azimuth, and a relative bearing to the MCI logging tool.

8.  A system for real-time formation assessment using a multi-component induction logging tool comprising:

    a multi-component induction (MCI) logging tool (300) comprising an antenna array (304; 306) that facilitates logging while the MCI logging tool is conveyed along a borehole (16) through a formation;
    a processing system, coupled to the MCI logging tool, comprising a processor (40), coupled to memory (41), that executes software;
    wherein the processing system determines a relative dip and a relative azimuth of the formation based on measurement data from the MCI logging tool, calculates true dip and true azimuth of the formation based on the relative dip and the relative azimuth, and assesses a quality of the true dip and the true azimuth calculations.

9.  The system of claim 8, wherein assessing the quality comprises calculating the variance of the true dip and the true azimuth, and optionally wherein calculating the variance of the true dip and the true azimuth comprises calculating the first partial derivative of the true dip and the true azimuth with respect to the relative dip, the relative azimuth, a borehole dip, a borehole azimuth, and a relative bearing to the MCI logging tool.

10. The system of claim 8 or 9, wherein calculating the true dip and the true azimuth comprises calculating the true dip and the true azimuth of the formation, based on the relative dip and the relative azimuth, while drilling.

11. The system of any of claims 8-10, wherein the processing system updates a model of the formation with the true dip and the true azimuth if the quality of the true dip and the true azimuth exceeds a threshold.

12. The system of any of claims 8-11, wherein the processing system determines a perforation point along the borehole if the quality of the true dip and the true azimuth exceeds a threshold.

13. The system of any of claims 8-12, wherein the processing system adjusts the steering of a drill bit within the borehole if the quality of the true dip and the true azimuth exceeds a threshold.

14. The system of claim any of claims 8-13, wherein calculating the true dip and the true azimuth comprises transforming the relative dip and the relative azimuth from a tool coordinate system to a borehole coordinate system and optionally from a borehole coordinate system to an earth coordinate system.

**15.** The system of any of claims 8-14, wherein calculating the true dip and the true azimuth comprises calculating the true dip and the true azimuth based on the relative dip, the relative azimuth, a borehole dip, a borehole azimuth, and a relative bearing to the MCI logging tool.

**Patentansprüche**

**1.** Verfahren zur Echtzeitformungsbeurteilung unter Verwendung eines Multikomponenteninduktionsmessungswerkzeugs, umfassend:

Fördern eines Multikomponenteninduktions-(MCI-)Messungswerkzeugs (300) entlang eines Bohrlochs (16) durch eine Formung;
Bestimmen einer relativen Steigung und eines relativen Azimuts der Formung basierend auf Messdaten von dem MCI-Messungswerkzeug;
Berechnen der wahren Steigung und des wahren Azimuts der Formung basierend auf der relativen Steigung und dem relativen Azimut; und
Beurteilen einer Qualität der Berechnungen der wahren Steigung und des wahren Azimuts.

**2.** Verfahren nach Anspruch 1, wobei das Beurteilen der Qualität das Berechnen der Varianz der wahren Steigung und des wahren Azimuts umfasst und wobei das Berechnen der Varianz der wahren Steigung und des wahren Azimuts optional das Berechnen der ersten partiellen Ableitung der wahren Steigung und des wahren Azimuts in Bezug auf die relative Steigung, den relativen Azimut, eine Bohrlochsteigung, einen Bohrlochazimut und eine Azimutpeilung zu dem MCI-Messungswerkzeug umfasst.

**3.** Verfahren nach Anspruch 1 oder 2, wobei das Berechnen der wahren Steigung und des wahren Azimuts das Berechnen der wahren Steigung und des wahren Azimuts der Formung basierend auf der relativen Steigung und dem relativen Azimut während des Bohrens umfasst.

**4.** Verfahren nach einem der vorhergehenden Ansprüche, ferner umfassend das Aktualisieren eines Modells der Formung mit der wahren Steigung und dem wahren Azimut, wenn die Qualität der wahren Steigung und des wahren Azimuts einen Schwellenwert übersteigt, und optional ferner umfassend das Bestimmen eines Perforationspunktes entlang des Bohrlochs, wenn die Qualität der wahren Steigung und des wahren Azimuts einen Schwellenwert übersteigt.

**5.** Verfahren nach einem der vorhergehenden Ansprüche, ferner umfassend das Einstellen der Lenkung eines Bohrmeißels innerhalb des Bohrlochs, wenn die Qualität der wahren Steigung und des wahren Azimuts einen Schwellenwert übersteigt.

**6.** Verfahren nach einem der vorhergehenden Ansprüche, wobei das Berechnen der wahren Steigung und des wahren Azimuts das Umwandeln der relativen Steigung und des relativen Azimuts von einem Werkzeugkoordinatensystem in ein Bohrlochkoordinatensystem und optional von einem Bohrlochkoordinatensystem in ein Erdkoordinatensystem umfasst.

**7.** Verfahren nach einem der vorhergehenden Ansprüche, wobei das Berechnen der wahren Steigung und des wahren Azimuts das Berechnen der wahren Steigung und des wahren Azimuts basierend auf der relativen Steigung, dem relativen Azimut, einer Bohrlochsteigung, einem Bohrlochazimut und einer Azimutpeilung zu dem MCI-Messungswerkzeug umfasst.

**8.** System zur Echtzeitformungsbeurteilung unter Verwendung eines Multikomponenteninduktionsmessungswerkzeugs, umfassend:

ein Multikomponenteninduktions-(MCI-)Messungswerkzeug (300), umfassend eine Antennenanordnung (304; 306), die das Messen vereinfacht, während das MCI-Messungswerkzeug entlang eines Bohrlochs (16) durch eine Formung gefördert wird;
ein Verarbeitungssystem, das an das MCI-Messungswerkzeug gekoppelt ist, umfassend einen Prozessor (40), an Speicher (41) gekoppelt, der Software ausführt;
wobei das Verarbeitungssystem eine relative Steigung und einen relativen Azimut der Formung basierend auf Messdaten von dem MCI-Messungswerkzeug bestimmt, wahre Steigung und wahren Azimut der Formung basierend auf der relativen Steigung und dem relativen Azimut berechnet und eine Qualität der Berechnungen der wahren Steigung und des wahren Azimuts beurteilt.

9. System nach Anspruch 8, wobei das Beurteilen der Qualität das Berechnen der Varianz der wahren Steigung und des wahren Azimuts umfasst und wobei das Berechnen der Varianz der wahren Steigung und des wahren Azimuts optional das Berechnen der ersten partiellen Ableitung der wahren Steigung und des wahren Azimuts in Bezug auf die relative Steigung, den relativen Azimut, eine Bohrlochsteigung, einen Bohrlochazimut und eine Azimutpeilung zu dem MCI-Messungswerkzeug umfasst.

10. System nach Anspruch 8 oder 9, wobei das Berechnen der wahren Steigung und des wahren Azimuts das Berechnen der wahren Steigung und des wahren Azimuts der Formung basierend auf der relativen Steigung und dem relativen Azimut während des Bohrens umfasst.

11. System nach einem der Ansprüche 8-10, wobei das Verarbeitungssystem ein Modell der Formung mit der wahren Steigung und dem wahren Azimut aktualisiert, wenn die Qualität der wahren Steigung und des wahren Azimuts einen Schwellenwert übersteigt.

12. System nach einem der Ansprüche 8-11, wobei das Verarbeitungssystem einen Perforationspunkt entlang des Bohrlochs bestimmt, wenn die Qualität der wahren Steigung und des wahren Azimuts einen Schwellenwert übersteigt.

13. System nach einem der Ansprüche 8-12, wobei das Verarbeitungssystem die Lenkung eines Bohrmeißels innerhalb des Bohrlochs einstellt, wenn die Qualität der wahren Steigung und des wahren Azimuts einen Schwellenwert übersteigt.

14. System nach einem der Ansprüche 8-13, wobei das Berechnen der wahren Steigung und des wahren Azimuts das Umwandeln der relativen Steigung und des relativen Azimuts von einem Werkzeugkoordinatensystem in ein Bohrlochkoordinatensystem und optional von einem Bohrlochkoordinatensystem in ein Erdkoordinatensystem umfasst.

15. System nach einem der Ansprüche 8-14, wobei das Berechnen der wahren Steigung und des wahren Azimuts das Berechnen der wahren Steigung und des wahren Azimuts basierend auf der relativen Steigung, dem relativen Azimut, einer Bohrlochsteigung, einem Bohrlochazimut und einer Azimutpeilung zu dem MCI-Messungswerkzeug umfasst.

**Revendications**

1. Procédé d'évaluation de formation en temps réel à l'aide d'un outil de diagraphie de conductivité à composantes multiples comprenant :

   le transport d'un outil (300) de diagraphie de conductivité à composantes multiples (MCI) le long d'un puits de forage (16) à travers une formation ;
   la détermination d'un pendage relatif et d'un azimut relatif de la formation en fonction de données de mesure provenant de l'outil de diagraphie MCI ;
   le calcul d'un pendage réel et d'un azimut réel de la formation en fonction du pendage relatif et de l'azimut relatif ; et
   l'évaluation d'une qualité des calculs du pendage réel et de l'azimut réel.

2. Procédé selon la revendication 1, dans lequel l'évaluation de la qualité comprend le calcul de la variance du pendage réel et de l'azimut réel, et éventuellement dans lequel le calcul de la variance du pendage réel et de l'azimut réel comprend le calcul de la première dérivée partielle du pendage réel et de l'azimut réel par rapport au pendage relatif, à l'azimut relatif, à un pendage de puits de forage, à un azimut de puits de forage et à un angle de relèvement relatif à l'outil de diagraphie MCI.

3. Procédé selon la revendication 1 ou 2, dans lequel le calcul du pendage réel et de l'azimut réel comprend le calcul du pendage réel et de l'azimut réel de la formation, en fonction du pendage relatif et de l'azimut relatif, pendant le forage.

**4.** Procédé selon l'une quelconque des revendications précédentes, comprenant en outre la mise à jour d'un modèle de la formation avec le pendage réel et l'azimut réel si la qualité du pendage réel et de l'azimut réel dépasse un seuil, et comprenant en outre éventuellement la détermination d'un point de perforation le long du puits de forage si la qualité du pendage réel et de l'azimut réel dépasse un seuil.

**5.** Procédé selon l'une quelconque des revendications précédentes, comprenant en outre l'ajustement de la direction d'un trépan de forage dans le puits de forage si la qualité du pendage réel et de l'azimut réel dépasse un seuil.

**6.** Procédé selon l'une quelconque des revendications précédentes, dans lequel le calcul du pendage réel et de l'azimut réel comprend la transformation du pendage relatif et de l'azimut relatif d'un système de coordonnées d'outil à un système de coordonnées de puits de forage et, éventuellement, d'un système de coordonnées de puits de forage à un système de coordonnées terrestres.

**7.** Procédé selon l'une quelconque des revendications précédentes, dans lequel le calcul du pendage réel et de l'azimut réel comprend le calcul du pendage réel et de l'azimut réel en fonction du pendage relatif, de l'azimut relatif, d'un pendage de puits de forage, d'un azimut de puits de forage et d'un angle de relèvement relatif à l'outil de diagraphie MCI.

**8.** Système d'évaluation de formation en temps réel à l'aide d'un outil de diagraphie de conductivité à composantes multiples comprenant :

un outil (300) de diagraphie de conductivité à composantes multiples (MCI) comprenant un réseau d'antennes (304 ; 306) qui facilite la diagraphie pendant que l'outil de diagraphie MCI est transporté le long d'un puits de forage (16) à travers une formation ;
un système de traitement, couplé à l'outil de diagraphie MCI, comprenant un processeur (40), couplé à une mémoire (41), qui exécute un logiciel ;
dans lequel le système de traitement détermine un pendage relatif et un azimut relatif de la formation en fonction des données de mesure provenant de l'outil de diagraphie MCI, calcule le pendage réel et l'azimut réel de la formation en fonction du pendage relatif et de l'azimut relatif et évalue une qualité des calculs du pendage réel et de l'azimut réel.

**9.** Système selon la revendication 8, dans lequel l'évaluation de la qualité comprend le calcul de la variance du pendage réel et de l'azimut réel, et éventuellement dans lequel le calcul de la variance du pendage réel et de l'azimut réel comprend le calcul de la première dérivée partielle du pendage réel et de l'azimut réel par rapport au pendage relatif, à l'azimut relatif, à un pendage de puits de forage, à un azimut de puits de forage et à un angle de relèvement relatif à l'outil de diagraphie MCI.

**10.** Système selon la revendication 8 ou 9, dans lequel le calcul du pendage réel et de l'azimut réel comprend le calcul du pendage réel et de l'azimut réel de la formation, en fonction du pendage relatif et de l'azimut relatif, pendant le forage.

**11.** Système selon l'une quelconque des revendications 8 à 10, dans lequel le système de traitement met à jour un modèle de la formation avec le pendage réel et l'azimut réel si la qualité du pendage réel et de l'azimut réel dépasse un seuil.

**12.** Système selon l'une quelconque des revendications 8 à 11, dans lequel le système de traitement détermine un point de perforation le long du puits de forage si la qualité du pendage réel et de l'azimut réel dépasse un seuil.

**13.** Système selon l'une quelconque des revendications 8 à 12, dans lequel le système de traitement ajuste la direction d'un trépan de forage dans le puits de forage si la qualité du pendage réel et de l'azimut réel dépasse un seuil.

**14.** Système selon l'une quelconque des revendications 8 à 13, dans lequel le calcul du pendage réel et de l'azimut réel comprend la transformation du pendage relatif et de l'azimut relatif d'un système de coordonnées d'outil à un système de coordonnées de puits de forage et, éventuellement, d'un système de coordonnées de puits de forage à un système de coordonnées terrestres.

**15.** Système selon l'une quelconque des revendications 8 à 14, dans lequel le calcul du pendage réel et de l'azimut réel comprend le calcul du pendage réel et de l'azimut réel en fonction du pendage relatif, de l'azimut relatif, d'un pendage de puits de forage, d'un azimut de puits de forage et d'un angle de relèvement relatif à l'outil de diagraphie MCI.

**FIG. 1**

FIG. 2

FIG. 3

FIG. 4

**FIG. 5A**

**FIG. 5B**

BEGIN — 602

600

Convey a MCI logging tool along a borehole through a formation — 604

606

Determine a relative dip and a relative azimuth based on data from the MCI logging tool

Calculate true dip and true azimuth based on the relative dip and the relative azimuth — 608

610

Assess the quality of the true dip and the true azimuth calculations

612

END

**FIG. 6**

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015051300 A1